# EUROPÄISCHE PATENTSCHRIFT

(11) **EP 2 768 636 B1**
(45) Veröffentlichungstag und Bekanntmachung des Hinweises auf die Patenterteilung: **16.03.2016**
(21) Anmeldenummer: 12778960.0
(22) Anmeldetag: 15.10.2012
(51) Int. Cl.: B25J 9/16, B23P 21/00, B64F 5/00

(54) **BETRIEBSVERFAHREN FÜR EIN POSITIONIERSYSTEM**
OPERATING METHOD FOR A POSITIONING SYSTEM
PROCÉDÉ POUR FAIRE FONCTIONNER UN SYSTÈME DE POSITIONNEMENT

(30) Priorität: 19.10.2011 DE 102011116437
(43) Veröffentlichungstag der Anmeldung: 27.08.2014
(73) Patentinhaber: BA Assembly & Turnkey Systems GmbH, 74321 Bietigheim-Bissingen (DE)
(72) Erfinder: MEIßNER, Alexander, 70197 Stuttgart (DE); HÄCKER, Jens, 71706 Markgröningen (DE); POPPE, Dirk, 75248 Ölbronn-Dürrn (DE); BIYIKLIOGLU, Nihat, 71665 Vaihingen/Enz (DE); MBAREK, Taoufik, 74321 Bietigheim-Bissingen (DE)
(74) Vertreter: Gottschald, Jan
(86) Internationale Anmeldenummer: PCT/EP2012/004308
(87) Internationale Veröffentlichungsnummer: WO 2013/056806

(56) Entgegenhaltungen:
- DE-A1-102004 056 285
- DE-A1-102006 011 341
- DE-A1-102008 062 026
- DE-A1-102009 018 991
- DE-U1-202008 009 987
- US-A1- 2010 135 754

## Beschreibung

Die Erfindung betrifft ein Betriebsverfahren für ein Positioniersystem, das zweckmäßig mehrere Positionierer umfasst, die jeweils vorzugsweise zumindest einen Manipulator zum Manipulieren eines Bauteils aufweisen. Bevorzugtes Anwendungsgebiet der Erfindung ist die Strukturmontage von Flugzeugen, bei der Schalensegmente zu Rumpfsektionen montiert werden, diese Rumpfsektionen dann gegebenenfalls zueinander positioniert und zu einem Rumpf zusammengefügt werden und anschließend z.B. noch das Tragwerk, die Leitwerke und das Fahrwerk an dem Rumpf montiert werden.

Aus der DE 10 2009 018 991 A1 ist eine Vorrichtung zur räumlichen Ausrichtung von mindestens zwei großformatigen Untergruppenbauteilen, insbesondere mindestens einer Seitenschale, mindestens einer Oberschale, mindestens einer Unterschale und/oder mindestens eines Fußbodengerüstes, in Relation zueinander zur Integration eines Bauteils, insbesondere einer Rumpfsektion eines Flugzeugs, bekannt. Die Vorrichtung umfasst mindestens zwei Positioniereinrichtungen zur Aufnahme jeweils eines Untergruppenbauteils, insbesondere mindestens zwei Seitenschalenpositionierer, mindestens einen Oberschalenpositionierer und/oder mindestens einen Unterschalenpositionierer, mindestens eine Messeinrichtung zum Erfassen einer Vielzahl von Messdaten, insbesondere von Positionsdaten der Untergruppenbauteile und/oder der Positioniereinrichtungen, mindestens eine Steuer- und/oder Regeleinrichtung, insbesondere mindestens eine CNC-Steuerung, und mindestens ein neuronales Netz. Zum Stand der Technik ist ferner auf die US 2010/135754 A1, die DE 10 2004 056285 A1 und die DE 10 2008 062026 A1 hinzuweisen.

Bei einer herkömmlichen Strukturmontage von Flugzeugen, bei der Bauteile in Form von Schalensegmenten zu Rumpfsektionen montiert werden, ist es ferner bekannt, dass eine Positionierung über starre, schwere Vorrichtungen erfolgt. Hierbei kann ein Bauteil in einen formgebenden Rahmen eingelegt werden. Das Bauteil kann zusammen mit dem Rahmen mithilfe der Vorrichtungen relativ zu einem Bezugssystem an einer ringförmigen Schablone positioniert werden. Die Position einer Vorrichtung kann dann periodisch erfasst werden. Bei diesem Montageprinzip werden zweckmäßig die Vorrichtungen und insbesondere der Rahmen mit einer hohen Steifigkeit ausgelegt. Dies hat allerdings den Nachteil, dass durch die konstruktive Auslegung als formgebender Rahmen die Flexibilität für Bauteilvarianten eingeschränkt ist.

Außerdem ist es bekannt, koordinierte Positioniereinheiten zur Schalenmontage einzusetzen. Hierbei können die Schalensegmente an definierten Aufnahmepunkten über so genannte Heißbeschläge aufgenommen und mithilfe von Montagevorrichtungen an Aufbockpunkten zueinander positioniert werden. Abhängig von den Dimensionen eines zu montierenden Flugzeugs können beispielsweise vier bis acht Heißbeschläge an dem Schalensegment angebracht werden. Bei diesem Montageprinzip kann die Positionsmessung der Schalensegmente Bestandteil jedes Montagevorgangs sein. Diese Ausgestaltung hat allerdings den Nachteil, dass ein sehr großer steuerungstechnischer Aufwand erforderlich ist.

Der Erfindung liegt deshalb die Aufgabe zugrunde, ein verbessertes und/oder alternatives Betriebsverfahren für ein Positioniersystem zu schaffen.

Diese Aufgabe kann durch ein erfindungsgemäßes Betriebsverfahren gemäß dem Hauptanspruch gelöst werden.

Erfindungsgemäß wird ein Betriebsverfahren für ein Positioniersystem geschaffen, das zweckmäßig mehrere Positionierer umfasst, von denen jeder zumindest einen, vorzugsweise mehrere Manipulatoren aufweist. Das Positioniersystem eignet sich insbesondere für die Flugzeug-Strukturmontage, kann aber auch z.B. für die Kraftfahrzeug-Montage (z.B. von Karosserieteilen, Scheiben, etc.) eingesetzt werden.

Im Rahmen der Erfindung wird ein Bauteil mittels Manipulatoren erfasst und vorzugsweise synchron manipuliert, während es von den Manipulatoren zweckmäßig gemeinsam erfasst ist.

Mit "synchronem Manipulieren" ist insbesondere die Synchronisation der Bewegungen der Manipulatoren gemeint.

Es ist möglich, dass die Manipulatoren das Bauteil von einer Ausgangssituation (Ausgangsposition und/oder Ausgangsorientierung) in eine Zielsituation (Zielposition und/oder Zielorientierung) synchron manipulieren.

Es ist möglich, dass das Bauteil z.B. in der Ausgangssituation oder allgemein ohne entsprechende Gegenmaßnahmen eine durch sein Eigengewicht verursachte Verformung aufweist. Bei dem Bauteil kann es sich somit insbesondere um ein biegeschlaffes Bauteil handeln.

Das Bauteil wird vorzugsweise in der Ausgangssituation durch die Manipulatoren erfasst und von den Manipulatoren in eine gewünschte Form manipuliert und/oder in einer gewünschten Form gehalten.

Die gewünschte Form entspricht vorzugsweise einer Form, in der die durch das Eigengewicht des Bauteils verursachte Verformung und/oder innere Spannungen des Bauteils kompensiert werden.

Im Rahmen der Erfindung können die durch das Eigengewicht des Bauteils verursachte Verformung und/oder die inneren Spannungen des Bauteils im Wesentlichen vollständig kompensiert werden, müssen es aber nicht zwangsläufig. Die Erfindung umfasst auch eine nur teilweise Kompensation.

Im Rahmen der Erfindung kann das In-Form-Manipulieren oder In-Form-Halten mittels gezieltem Manipulierens aller Manipulatoren erfolgen und/oder mittels gezieltem Manipulierens nur einiger der Manipulatoren. Das heißt, es sind nicht zwangsläufig alle Manipulatoren erforderlich, um das Bauteil in die gewünschte Form zu manipulieren und/oder in der gewünschten Form zu halten.

Es ist möglich, dass die Manipulatoren zumindest abschnittsweise das Bauteil in der gewünschten Form zu der Zielsituation transportieren. Dabei ist es in Abhängigkeit von der Ausgangssituation und der Zielsituation und der Geometrie des Bauteils möglich, dass zwischen der Ausgangssituation und der Zielsituation Manipulatoren zumindest abschnittsweise das Bauteil kontinuierlich so manipulieren, dass es in der gewünschten Form gehalten wird. Mit anderen Worten ist es also möglich, dass die Manipulatoren das Bauteil nicht nur manipulieren, um es zu transportieren, sondern auch, um es gleichzeitig in der gewünschten Form zu halten.

Das Bauteil wird auf seinem Weg von der Ausgangssituation zu der Zielsituation vorzugsweise stets von den Manipulatoren in der gewünschten Form gehalten. Im Rahmen der Erfindung ist es aber auch möglich, dass das Bauteil erst in der Zielsituation in die gewünschte Form manipuliert wird.

Die Manipulatoren können das Bauteil z.B. durch synchrones oder nicht-synchrones Manipulieren (z.B. koordiniertes Manipulieren) in die gewünschte Form bringen und/oder in der gewünschten Form halten.

Wie schon erwähnt, kann das Bauteil in der Ausgangssituation die durch sein Eigengewicht verursachte Verformung aufweisen.

In einer bevorzugten Ausführungsform der Erfindung wird das Bauteil von einer Halte- und/oder Transportvorrichtung (z.B. einer Krankonstruktion) in die Ausgangssituation gebracht, in der es von den Manipulatoren (z.B. bereits in der gewünschten Form) erfasst wird und/oder in die gewünschte Form manipuliert wird. Es ist möglich, dass die Manipulatoren das Bauteil bereits in der gewünschten Form erfassen. In diesem Fall hält die Halte- und/oder Transportvorrichtung das Bauteil bereits zweckmäßig in der gewünschten Form. Es ist aber auch möglich, dass die Manipulatoren ein durch sein Eigengewicht verformtes Bauteil erfassen und es in die gewünschte Form manipulieren. In diesem Fall hält die Halte- und/oder Transportvorrichtung das Bauteil nicht bereits zweckmäßig in der gewünschten Form.

Vorzugsweise erfolgt in der Ausgangssituation eine Übergabe des Bauteils von der Halte- und/oder Transportvorrichtung auf die Manipulatoren.

Bei der Zielsituation kann es sich im Rahmen der Erfindung um jede beliebige Situation (Position und/oder Orientierung) handeln, die ungleich zu einer Ausgangssituation ist. Die Zielsituation kann, muss sich aber nicht zwangsläufig auf eine Endsituation beziehen. Bevorzugt ist die Zielsituation eine Montagesituation, in der das Bauteil z.B. an ein Flugzeugteil montierbar ist. Ähnlich kann sich die Ausgangssituation auf eine Startsituation beziehen, muss es aber nicht zwangsläufig.

Die Manipulatoren manipulieren das Bauteil vorzugsweise synchron und zwar unabhängig von der Betriebssituation, z.B. einer Teach-, Betriebs- und/oder Not-Stop-Situation.

Gemäß der Erfindung wird dem Bauteil ein Koordinatensystem (zweckmäßig ein Master-Koordinatensystem) zugeordnet und den jeweiligen Manipulatoren jeweilige Basiskoordinatensysteme (zweckmäßig Slave-Koordinatensysteme).

Das erfindungsgemäße Betriebsverfahren umfasst ferner die folgenden Merkmale:
- Position und/oder Orientierung des Bauteils in einer Ausgangssituation werden ermittelt oder sind ermittelt,
- Position und/oder Orientierung des Bauteils in einer Zielsituation werden ermittelt oder sind ermittelt,
- Referenzbewegungsparameter werden ermittelt oder sind ermittelt, wobei sich die Referenzbewegungsparameter auf ein dem Bauteil zugeordnetes Koordinatensystem beziehen und z.B. die Bewegung des Bauteils von der Position und/oder Orientierung in der Ausgangssituation zu der Position und/oder Orientierung in der Zielsituation beschreiben, wodurch vorzugsweise eine Master-Kinematik definiert wird,
- die Referenzbewegungsparameter werden oder sind in das jeweilige Basiskoordinatensystem transformiert,
- die Manipulatoren manipulieren das Bauteil basierend auf den jeweiligen transformierten Referenzbewegungsparametern (zweckmäßig nun beziehend auf die jeweiligen Basiskoordinatensysteme der Manipulatoren), wodurch vorzugsweise die jeweiligen Manipulatoren eine Slave-Kinematik ausführen.

Vorteilhaft werden dadurch die jeweiligen Basiskoordinatensysteme auf das dem Bauteil zugeordnete Koordinatensystem referenziert, das vorzugsweise einem 6D-Koordinatensystem entspricht (3 Positionskoordinaten und 3 Orientierungskoordinaten).

Sowohl das dem Bauteil zugeordnete Koordinatensystem als auch die jeweiligen Basiskoordinatensysteme der Manipulatoren beziehen sich zweckmäßig auf Referenzpunkte, insbesondere sogenannte "Tool Center Points" (TCP - "Werkzeugmittelpunkt" oder "Werkzeugreferenzpunkt"). Besonders bevorzugt handelt es sich bei den Koordinatensystemen somit um TCP-Koordinatensysteme.

Vorzugsweise sind die Referenzpunkte der jeweiligen Basiskoordinatensysteme der Manipulatoren relativ zu den jeweiligen Manipulatoren fixiert, wodurch sich die jeweiligen Basiskoordinatensysteme mit den jeweiligen Manipulatoren mitbewegen. Alternativ oder ergänzend kann der Referenzpunkt des dem Bauteil zugeordneten Koordinatensystems relativ zu dem Bauteil fixiert sein, wodurch sich das dem Bauteil zugeordnete Koordinatensystem mit dem Bauteil mitbewegt.

Es ist möglich, dass die jeweiligen Basiskoordinatensysteme (bzw. deren Referenzpunkte oder TCPs) der Manipulatoren stets dem Koordinatensystem (bzw. dessen Referenzpunkt oder TCP) des Bauteils folgen, insbesondere während die Transformation fixiert ist zwischen den Manipulatoren und den Angriffspunkten der Manipulatoren an dem Bauteil und/oder die Transformation fixiert ist zwischen den Angriffspunkten der Manipulatoren an dem Bauteil und der durch die Referenzbewegungsparameter definierten Master-Kinematik des Bauteils. Die Referenzierung bezieht sich zweckmäßig auch auf die Slave-Kinematiken der Manipulatoren und die Master-Kinematik des Bauteils.

Vorzugsweise sind die Manipulatoren mit ein und derselben Steuer- und/oder Rechen-Einheit verbunden, die vorzugsweise die Manipulatoren gemeinsam, insbesondere simultan steuern kann.

Insbesondere können z.B. das synchrone Manipulieren oder zumindest der Start des synchronen Manipulierens mittels der Manipulatoren von ein und derselben Steuer- und/oder RechenEinheit gesteuert werden.

Außerdem können die Referenzbewegungsparameter (zweckmäßig die Master-Kinematik) und/oder die jeweiligen transformierten Referenzbewegungsparameter (zweckmäßig die Slave-Kinematiken) in ein und derselben Steuer- und/oder Rechen-Einheit beinhaltet sein (z.B. darin gespeichert, ermittelt und/oder verarbeitet werden etc.).

Es ist möglich, dass die Manipulatoren über eine Master-/ Slave-Schnittstelle synchron verlinkt sind.

Die Manipulatoren können,gleicher oder unterschiedlicher Bauart sein und z.B. lineare, serielle, kartesische und hybride Manipulatoren umfassen. Beispielsweise können die Manipulatoren eines Positionierers gleicher oder unterschiedlicher Bauart sein. Ebenso können die Manipulatoren verschiedener Positionierer gleicher oder unterschiedlicher Bauart sein.

Das Bauteil ist vorzugsweise ein Schalensegment z.B. für eine Flugzeugaußenhaut (z.B. einen Flugzeugrumpf), das in der Zielsituation z.B. an ein anderes Flugzeugteil montiert wird. In diesem Fall entspricht die Zielsituation einer Montagesituation.

Zu erwähnen ist noch, dass die Manipulatoren z.B. einzeln oder gruppenweise verfahren werden können. Außerdem können die Manipulatoren z.B. ein- oder mehrachsig ausgeführt sein. Ferner können die Manipulatoren z.B. kaskadiert, synchron verfahren werden. Bei den Positionierern und/oder den Manipulatoren kann es sich z.B. um herkömmliche Roboter oder andere geeignete Handhabungsgeräte handeln.

Außerdem ist noch zu erwähnen, dass eine synchrone Korrektur der Kinematiken der Manipulatoren erfolgen kann, z.B. in Abhängigkeit der Auslenkung und/oder Durchbiegung der Linearachsen der Manipulatoren und/oder der gemessenen Last an den Erfassungspunkten der Manipulatoren am Bauteil, was dem Prinzip nach an sich bereits aus der DE 10 2011 111 758.3 bekannt ist, so dass der Inhalt dieser Patentanmeldung der vorliegenden Offenbarung in vollem Umfang zuzurechnen ist.

Die Erfindung umfasst auch eine Steuerung für ein Positioniersystem, insbesondere für die Flugzeug-Strukturmontage, wobei das Positioniersystem mehrere Positionierer umfasst, die jeweils zumindest einen Manipulator aufweisen, wobei die Steuerung im Betrieb das Betriebsverfahren wie hierin beschrieben ausführt.

Außerdem umfasst die Erfindung ein Positioniersystem, insbesondere für die Flugzeug-Strukturmontage, wobei das Positioniersystem mehrere Positionierer umfasst, die jeweils zumindest einen Manipulator aufweisen. Das Positioniersystem (insbesondere die Manipulatoren) ist so konfiguriert, dass es im Betrieb das Betriebsverfahren wie hierin beschrieben ausführt. Alternativ oder ergänzend kann das Positioniersystem die vorstehend erwähnte Steuerung umfassen.

Obige erfindungsgemäßen Merkmale und Ausführungsformen sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele der Erfindung in Verbindung mit den beigefügten Figuren.
- Fig. 1: zeigt eine Perspektivansicht eines Positioniersystems und eines zu manipulierenden Bauteils gemäß einer Ausführungsform der Erfindung,
- Fig. 2: zeigt ein Flussdiagram eines Betriebsverfahrens für ein Positioniersystem gemäß einer Ausführungsform der Erfindung,
- Fig. 3: zeigt ein Software-Flussdiagram für ein Positioniersystem gemäß einer Ausführungsform der Erfindung,
- Fig. 4: zeigt das Prinzip einer Transformation zwischen einer Master-Kinematik und einer Slave-Kinematik gemäß einer Ausführungsform der Erfindung,
- Fig. 5: zeigt eine Steuerungsarchitektur für ein Positioniersystem gemäß einer Ausführungsform der Erfindung,
- Fig. 6: zeigt eine andere Steuerungsarchitektur für ein Positioniersystem gemäß einer Ausführungsform der Erfindung, und
- Fig. 7: zeigt eine wiederum andere Steuerungsarchitektur für ein Positioniersystem gemäß einer Ausführungsform der Erfindung.

Die unter Bezugnahme auf die Figuren beschriebenen Ausführungsformen stimmen teilweise überein, wobei ähnliche oder identische Teile mit dem gleichen Bezugszeichen versehen sind, und zu deren Erläuterung auch auf die Beschreibung anderer Ausführungsformen oder Figuren verwiesen wird, um Wiederholungen zu vermeiden.

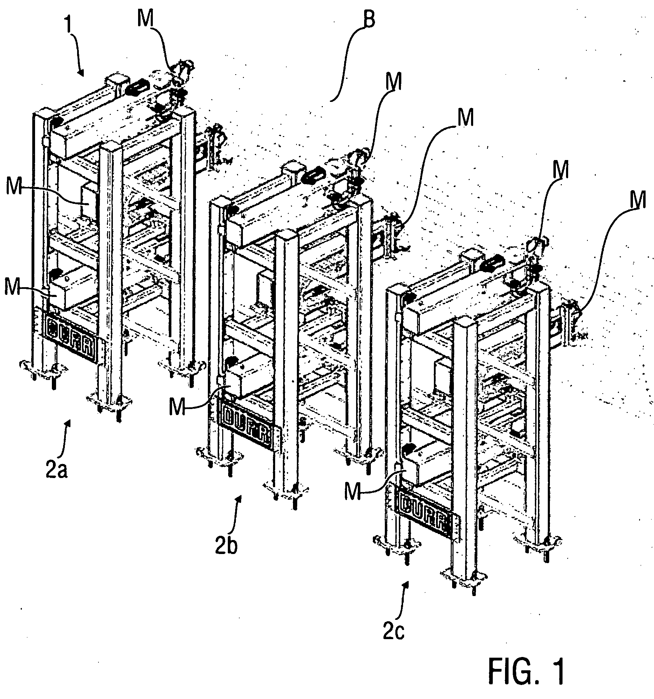

Fig. 1 zeigt eine Perspektivansicht eines Positioniersystems 1 gemäß einer Ausführungsform der Erfindung, das mehrere Positionierer 2a, 2b und 2c umfasst. Jeder der Positionierer 2a, 2b, 2c umfasst drei Manipulatoren, die der Übersichtlichkeit halber alle mit dem Bezugszeichen M versehen sind. Die Manipulatoren M können gleicher oder unterschiedlicher Bauart sein und sind konfiguriert, um ein Bauteil B in Form eines Schalensegments zu erfassen und es synchron zu manipulieren, während es von den Manipulatoren M gemeinsam erfasst ist.

Bei der in Fig. 1 gezeigten Situation kann es sich um eine Ausgangssituation des Bauteils B handeln, in die das Bauteil B von einer nicht gezeigten Krankonstruktion gebracht worden ist, bevor es von zumindest einigen der Manipulatoren M erfasst und abgenommen wurde.

Das Bauteil B ist biegeschlaff und weist ohne entsprechende Gegenmaßnahmen eine durch sein Eigengewicht verursachte Verformung auf. Die Manipulatoren M sind so konfiguriert, dass sie das Bauteil B in der Ausgangssituation in einer gewünschten Form erfassen oder gegebenenfalls zunächst in eine gewünschte Form manipulieren, in der die durch das Eigengewicht des Bauteils B verursachte Verformung und innere Spannungen zumindest teilweise kompensiert sind. Außerdem sind die Manipulatoren M so konfiguriert, dass sie das Bauteil B in der gewünschten Form transportieren, vorzugsweise von der Ausgangssituation in eine Zielsituation, in der es z.B. an ein anderes Flugzeugteil montiert werden kann.

Die Manipulatoren M sind mit ein und derselben Steuer-/ Recheneinheit verbunden und werden somit von ein und derselben Steuer-/Recheneinheit gesteuert und zwar vorzugsweise simultan.

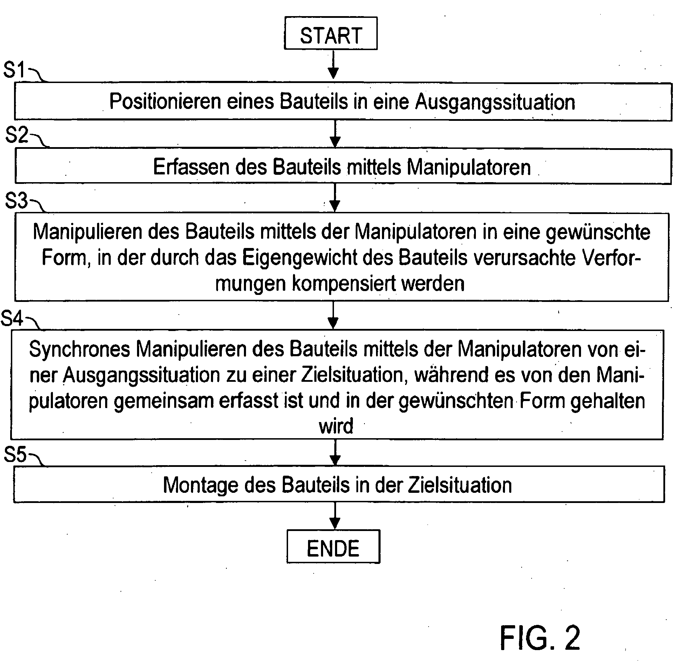

Fig. 2 zeigt ein Flussdiagram eines Betriebsverfahrens gemäß einer Ausführungsform der Erfindung, z.B. für ein Positioniersystem 1 wie unter Bezugnahme auf Fig. 1 beschrieben. Insbesondere bezieht sich das Flussdiagram auf ein Betriebsverfahren für die Manipulatoren M.

In einem ersten Schritt S1 wird ein Bauteil B z.B. mittels einer Krankonstruktion in eine Ausgangssituation gebracht. Das Bauteil B ist biegeschlaff und weist ohne entsprechende Gegenmaßnahmen durch sein Eigengewicht verursachte Verformungen auf.

In einem Schritt S2 wird das Bauteil B mittels Manipulatoren M erfasst und von der Krankonstruktion abgenommen.

In einem Schritt S3 wird das Bauteil B mittels der Manipulatoren M in eine gewünschte Form manipuliert bzw. in einer gewünschten Form gehalten, in der die durch das Eigengewicht des Bauteils verursachten Verformungen kompensiert werden.

In einem Schritt S4 wird das Bauteil B mittels der Manipulatoren M von einer Ausgangssituation zu einer Zielsituation synchron manipuliert, während es von mehreren Manipulatoren M gemeinsam erfasst ist undvorzugsweise stets in der gewünschten Form gehalten wird.

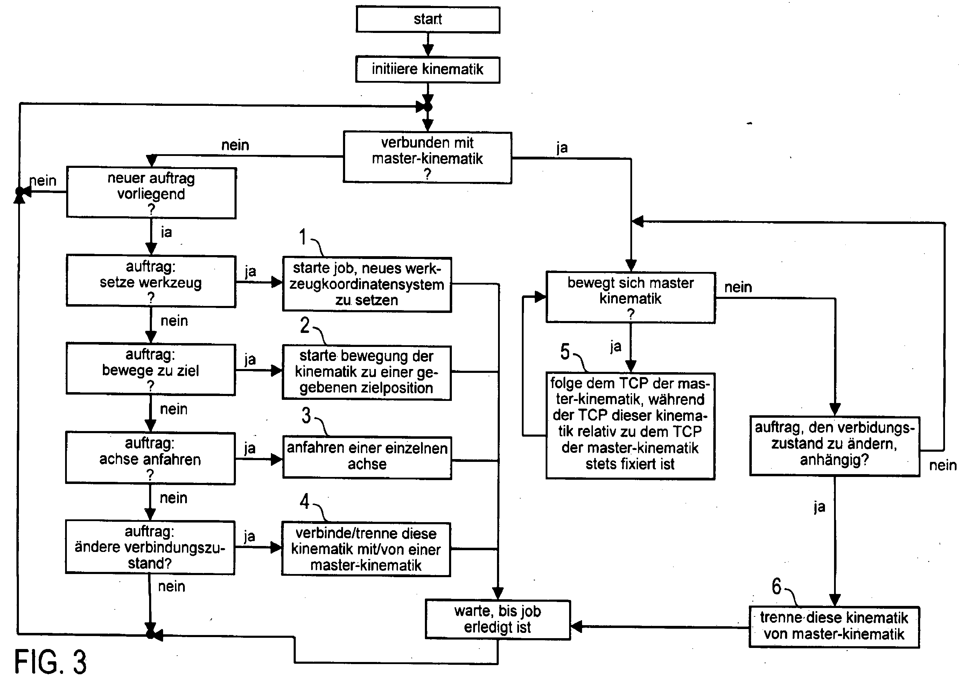

In einem Schritt S5 wird das Bauteil B in der Zielsituation z.B. an ein anderes Flugzeugteil montiert. Fig. 3 zeigt ein Software-Flussdiagram für ein Positioniersystem 1 gemäß einer Ausführungsform der Erfindung. Das Flussdiagram bezieht sich insbesondere auf einen Manipulator M und insbesondere dessen Kinematik. Der beschriebene Ablauf kann auch bei den verbleibenden Manipulatoren M entsprechende Anwendung finden. Das Flussdiagram ist selbsterklärend, so dass an dieser Stelle keine weiteren Beschreibungen erforderlich sind.

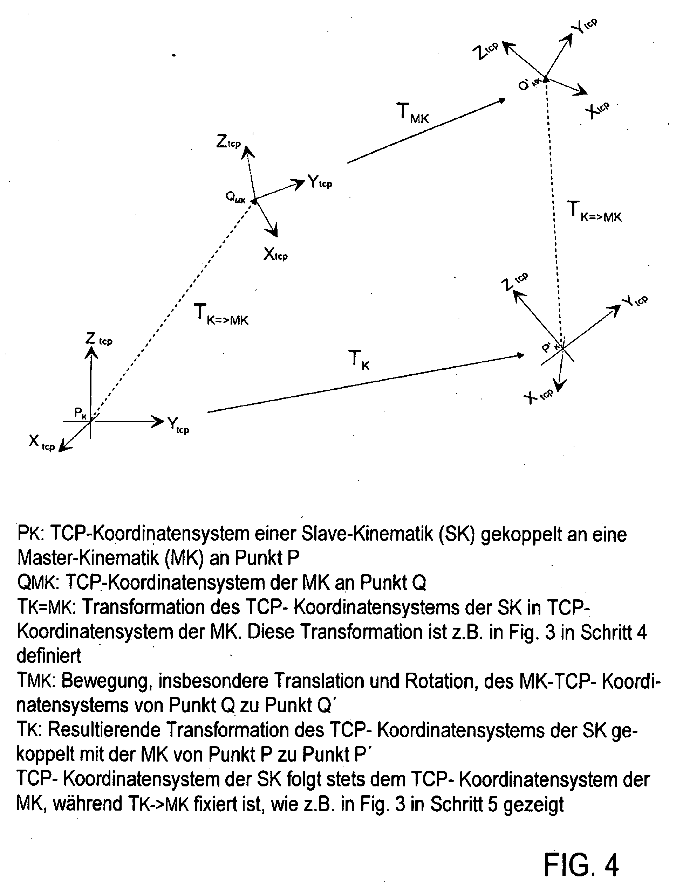

Fig. 4 zeigt das Prinzip einer Transformation zwischen einer Master-Kinematik und einer Slave-Kinematik bezogen auf einen Manipulator M gemäß einer Ausführungsform der Erfindung. Das beschriebene Prinzip kann auch bei den verbleibenden Manipulatoren M entsprechende Anwendung finden.

Dem Bauteil B sind eine Master-Kinematik und ein Master-Koordinatensystem zugeordnet, während dem Manipulator M eine Slave-Kinematik und ein Basiskoordinatensystem (Slave-Koordinatensystem) zugeordnet sind. Das Master-Koordinatensystem und das Slave-Koordinatensystem beziehen sich auf jeweilige Referenzpunkte, insbesondere sogenannte "Tool Center Points" (TCP - "Werkzeugmittelpunkt" oder "Werkzeugreferenzpunkt") und können somit auch als TCP-Koordinatensysteme bezeichnet werden.

Ermittelte Referenzbewegungsparameter, die sich auf das Master-Koordinatensystem beziehen und die die Bewegung (z.B. Bahnkurve, Position, Orientierung, Geschwindigkeit, Beschleunigung, etc.) des Bauteils B beschreiben, sind bereits in das Slave-Koordinatensystem des Manipulators M transformiert oder werden in das Slave-Koordinatensystem des Manipulators M transformiert. Dadurch kann der Manipulator M das Bauteil B in Abhängigkeit von den transformierten Referenzbewegungsparametern, die sich nun auf das Slave-Koordinatensystem des Manipulators M beziehen, manipulieren. Es wird ersichtlich, dass die Referenzbewegungsparameter eine Master-Kinematik beschreiben, während der Manipulator M eine Slave-Kinematik ausführt.

Das Slave-Koordinatensystem des Manipulators M ist relativ zu dem Manipulator M fixiert, wodurch es sich mit dem Manipulator M mitbewegt. Alternativ oder ergänzend kann das Master-Koordinatensystem des Bauteils B relativ zu dem Bauteil B fixiert sein, wodurch es sich mit dem Bauteil B mitbewegt.

Wie aus Fig. 4 ersichtlich, folgt das Slave-Koordinatensystem des Manipulators M stets dem Master-Koordinatensystem des Bauteils B. Insbesondere ist das Slave-Koordinatensystem des Manipulators M auf das dem Bauteil B zugeordnete Master-Koordinatensystem referenziert und folgt diesem, während die Transformation zwischen dem Manipulator M und dem Angriffspunkt des Manipulators M an dem Bauteil B fixiert ist und/oder die Transformation zwischen dem Angriffspunkt des Manipulators M an dem Bauteil B und der Master-Kinematik des Bauteils B fixiert ist.

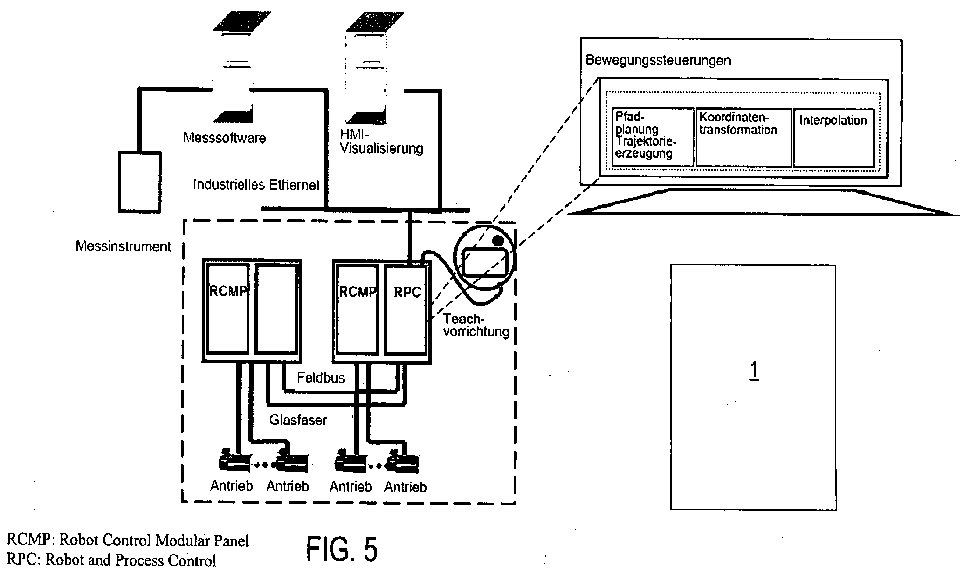

Fig. 5 zeigt eine Steuerungsarchitektur für ein Positioniersystem 1, insbesondere dessen Manipulatoren M, gemäß einer Ausführungsform der Erfindung. Die Steuerung ist für Manipulatoren M konfiguriert, die die gleichen Strukturen aufweisen. Fig. 5 zeigt die Steuerungsarchitektur eines Positioniersystems 1, das z.B. für die Montage von Fuselage-Sektionen aus einzelnen Schalensegmenten und Fußbodenrost eingesetzt wird. Das Positioniersystem 1 kann z.B. aus zwölf kartesischen Manipulatoren M bestehen, jeweils mit drei angetriebenen Achsen. Die Steuerung ("Motion Controller") beinhaltet somit z.B. zwölf identische Transformationen. Die Steuer-/Recheneinheit zum Steuern der Manipulatoren M ist mit RPC gekennzeichnet ("Robot and Process Control" - Roboter- und Prozesssteuerung). RCMP ("Robot Control Modular Panel") kennzeichnet einen modularen Steuerschrank, während HMI eine Mensch-Maschine-Schnittstelle ("Human-Machine-Interface") kennzeichnet.

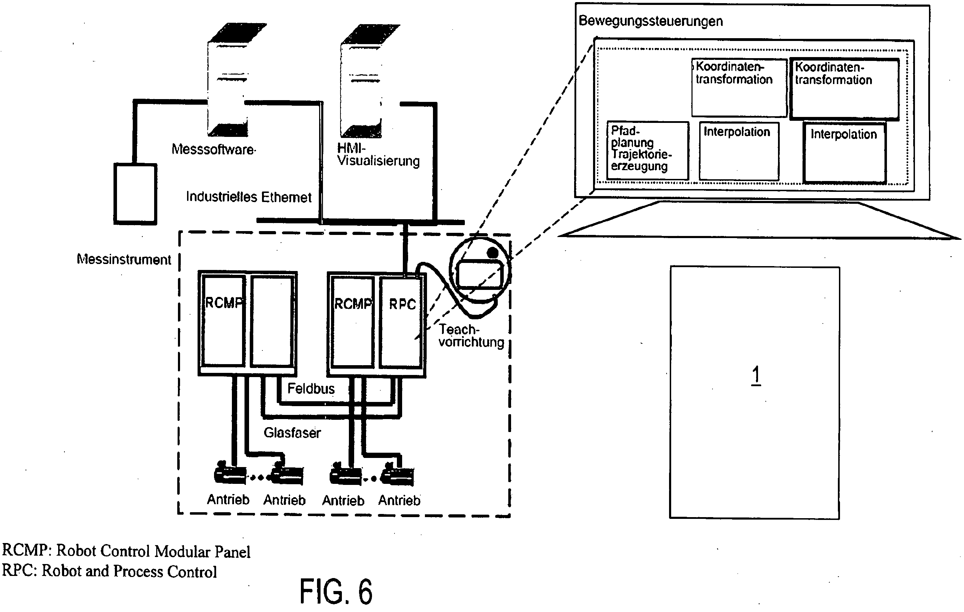

Fig. 6 zeigt eine andere Steuerungsarchitektur für ein Positioniersystem 1, insbesondere dessen Manipulatoren M, gemäß einer anderen Ausführungsform der Erfindung. Eine Besonderheit dieser Ausführungsform ist, dass die einzelnen Manipulatoren M verschiedene Strukturen aufweisen. Die Steuerungsarchitektur ist für ein Positioniersystem 1 konfiguriert, das z.B. aus 6 Manipulatoren M mit 18 Achsen besteht. 5 von den Manipulatoren M weisen z.B. eine kartesische Struktur auf, während der verbleibende Manipulator M z.B. eine parallele Struktur aufweist.

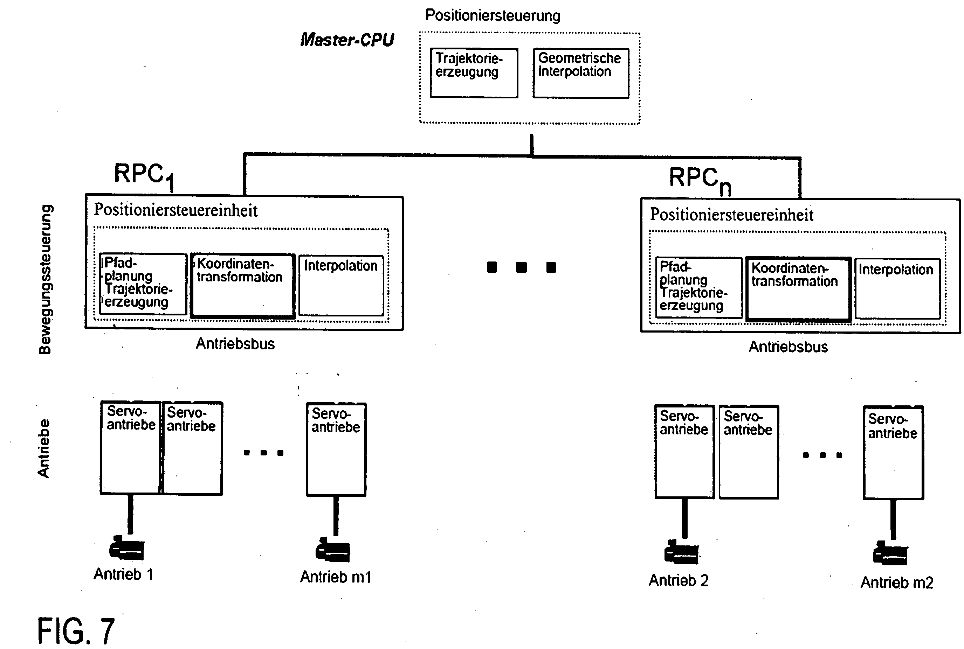

Fig. 7 zeigt eine Steuerungsarchitektur für ein Positioniersystem 1 mit mehreren Manipulatoren M und Motion-Controllern (Bewegungssteuerungen) gemäß einer Ausführungsform der Erfindung.

Eine Steuerung ist für die Kontrolle von Systemen mehrerer Manipulatoren M mit separaten Motion-Controllern zuständig.

Jeder Manipulator M hat eine eigene Steuerung. Alternativ oder ergänzend kann auch eine Manipulatoreinheit aus zwei oder mehr Manipulatoren M eine eigene Steuerung aufweisen.

Eine Master-CPU (Central Processing Unit - Hauptprozessor) sichert die Planung der Bewegungen und/oder der räumlichen Trajektorien der einzelnen Manipulatoren M (insbesondere deren Manipulator-TCPs).

Des Weiteren ist die Master-CPU z.B. für die Taktzeiten, in denen die errechneten Datenpakete übertragen werden, und/oder für die Synchronisation des Starts der Bewegungen der Manipulatoren M (die z.B. über I/O (Input/Output - Eingabe/Ausgabe) kommuniziert werden, zuständig.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Betriebsverfahren für ein Positioniersystem (1), insbesondere für die Flugzeug-Strukturmontage, wobei das Positioniersystem (1) mehrere Positionierer (2a, 2b, 2c) umfasst, die jeweils zumindest einen Manipulator (M) aufweisen, wobei:
- ein Bauteil (B) mittels der Manipulatoren (M) erfasst wird, und
- das Bauteil (B) mittels der Manipulatoren (M) synchron manipuliert wird, während es von den Manipulatoren (M) gemeinsam erfasst ist, **dadurch gekennzeichnet, dass**
- jedem Manipulator (M) ein jeweiliges Basiskoordinatensystem zugeordnet ist,
- Position und Orientierung des Bauteils (B) in der Ausgangssituation ermittelt werden oder ermittelt sind,
- Position und Orientierung des Bauteils (B) in der Zielsituation ermittelt werden oder ermittelt sind,
- Referenzbewegungsparameter ermittelt werden oder ermittelt sind, die sich auf ein dem Bauteil (B) zugeordnetes Koordinatensystem beziehen und die die Bewegung des Bauteils (B) von der Position und Orientierung in der Ausgangssituation zu der Position und Orientierung in der Zielsituation beschreiben,
- die Referenzbewegungsparameter in das jeweilige Basiskoordinatensystem transformiert sind oder transformiert werden, und
- die Manipulatoren (M) das Bauteil (B) basierend auf den jeweiligen transformierten Referenzbewegungsparametern manipulieren.

2. Betriebsverfahren nach Anspruch 1, wobei die Manipulatoren (M) das Bauteil (B) synchron manipulieren, um es von einer Ausgangssituation zu einer Zielsituation zu transportieren.

3. Betriebsverfahren nach Anspruch 1 oder 2, wobei das Bauteil (B) eine durch sein Eigengewicht verursachte Verformung aufweist und die Manipulatoren (M) das Bauteil (B) in eine gewünschte Form manipulieren und/oder in einer gewünschten Form halten.

4. Betriebsverfahren nach Anspruch 3, wobei die gewünschte Form einer Form entspricht, in der die durch das Eigengewicht des Bauteils (B) verursachte Verformung oder innere Spannungen des Bauteils (B) kompensiert werden.

5. Betriebsverfahren nach Anspruch 3 oder 4, wobei die Manipulatoren (M) zumindest abschnittsweise das Bauteil (B) in der gewünschten Form zu der Zielsituation transportieren.

6. Betriebsverfahren nach einem der Ansprüche 3 bis 5, wobei die Manipulatoren (M) das Bauteil (B) durch synchrones oder nicht-synchrones, insbesondere koordiniertes Manipulieren, in die gewünschte Form manipulieren.

7. Betriebsverfahren nach einem der vorhergehenden Ansprüche, wobei das Bauteil (B) in der Ausgangssituation die durch sein Eigengewicht verursachte Verformung aufweist.

8. Betriebsverfahren nach einem der vorhergehenden Ansprüche, wobei das Bauteil (B) von einer Halte- und/oder Transportvorrichtung, vorzugsweise einer Krankonstruktion, in die Ausgangssituation gebracht wird, in der es von den Manipulatoren (M) erfasst wird und/oder in die gewünschte Form manipuliert wird.

9. Betriebsverfahren nach einem der vorhergehenden Ansprüche, wobei das Bauteil (B) in der Zielsituation von den Manipulatoren (M) in der gewünschten Form gehalten und an ein Flugzeugteil montiert wird.

10. Betriebsverfahren nach einem der vorhergehenden Ansprüche, wobei die Manipulatoren (M) unabhängig von der Betriebssituation, vorzugsweise Teach-, Betriebs- oder Not-Stop-Situation, das Bauteil (B) synchron manipulieren.

11. Betriebsverfahren nach einem der vorhergehenden Ansprüche, wobei die Referenzbewegungsparameter zumindest eines von Folgenden beschreiben:
- Bewegungsbahn des Bauteils (B),
- Geschwindigkeit des Bauteils (B),
- Beschleunigung des Bauteils (B),
- Position des Bauteils (B),
- Orientierung des Bauteils (B).

12. Betriebsverfahren nach einem der vorhergehenden Ansprüche, wobei die jeweiligen Basiskoordinatensysteme der Manipulatoren (M) relativ zu den jeweiligen Manipulatoren (M) fixiert sind, um sich mit den jeweiligen Manipulatoren (M) mitzubewegen und das dem Bauteil (B) zugeordnete Koordinatensystem relativ zu dem Bauteil (B) fixiert ist, um sich mit dem Bauteil (B) mitzubewegen.

13. Betriebsverfahren nach einem der vorhergehenden Ansprüche, wobei die jeweiligen Basiskoordinatensysteme der Manipulatoren (M) auf das dem Bauteil (B) zugeordnete Koordinatensystem referenziert sind und diesem folgen, während die Transformation zwischen den Manipulatoren (M) und den Angriffspunkten der Manipulatoren (M) an dem Bauteil (B) fixiert ist und/oder die Transformation zwischen den Angriffspunkten der Manipulatoren (M) an dem Bauteil (B) und der durch die Referenzbewegungsparameter definierten Master-Kinematik des Bauteils (B) fixiert ist.

14. Betriebsverfahren nach einem der vorhergehenden Ansprüche, wobei den Manipulatoren (M) ein und dieselbe Steuer-/Recheneinheit (RPC) zugeordnet ist und die Manipulatoren (M), insbesondere deren synchrones Manipulieren oder zumindest der Start des synchronisierten Manipulierens mittels der Manipulatoren (M), von ein und derselben Steuer-/Recheneinheit (RPC) gesteuert werden, vorzugsweise simultan.

15. Betriebsverfahren nach einem der vorhergehenden Ansprüche, wobei die Referenzbewegungsparameter des Bauteils (B) und die jeweiligen transformierten Referenzbewegungsparameter in ein und derselben Steuer- /Recheneinheit (RPC) beinhaltet sind.

16. Betriebsverfahren nach einem der vorhergehenden Ansprüche, wobei die Manipulatoren (M) über eine Master-/Slave-Schnittstelle synchron verlinkt sind.

17. Betriebsverfahren nach einem der vorhergehenden Ansprüche, wobei die Manipulatoren (M) gleicher oder unterschiedlicher Bauart sind, ausgewählt aus der Gruppe umfassend lineare, serielle, kartesische und hybride Manipulatoren.

18. Betriebsverfahren nach einem der vorhergehenden Ansprüche, wobei das Bauteil (B) ein Schalensegment für eine Flugzeugaußenhaut ist und die Zielsituation des Schalensegments einer Montagesituation entspricht, in der das Schalensegment montiert wird.

19. Steuerung für ein Positioniersystem (1), insbesondere für die Flugzeug-Strukturmontage, wobei das Positioniersystem (1) mehrere Positionierer (2a, 2b, 2c) umfasst, die jeweils zumindest einen Manipulator (M) aufweisen, wobei die Steuerung im Betrieb das Betriebsverfahren nach einem der vorhergehenden Ansprüche ausführt.

20. Positioniersystem (1), insbesondere für die Flugzeug-Strukturmontage, wobei das Positioniersystem (1) mehrere Positionierer umfasst, die jeweils zumindest einen Manipulator (M) aufweisen,
- wobei die Manipulatoren (M) so konfiguriert sind, dass sie im Betrieb das Betriebsverfahren nach einem der Ansprüche 1 bis 18 ausführen, oder
- wobei das Positioniersystem (1) eine Steuerung nach Anspruch 19 umfasst.

## Claims

1. Operating method for a positioning system (1), in particular for aircraft structural assembly, the positioning system (1) comprising a plurality of positioners (2a, 2b, 2c) which respectively have at least one manipulator (M), in which:
- a component (B) is detected by means of the manipulators (M), and
- the component (B) is synchronously manipulated by means of the manipulators (M) while it is detected jointly by the manipulators (M), **characterized in that**
- each manipulator (M) is assigned a respective base coordinate system,
- position and orientation of the component (B) are determined, or have been determined, in the initial situation,
- position and orientation of the component (B) are determined, or have been determined, in the target situation,
- reference movement parameters are determined, or have been determined, which refer to a coordinate system assigned to the component (B), and which describe the movement of the component (B) from the position and orientation in the initial situation to the position and orientation in the target situation,
- the reference movement parameters have been transformed, or are transformed, into the respective base coordinate system, and
- the manipulators (M) manipulate the component (B) on the basis of the respective transformed reference movement parameters.

2. Operating method according to Claim 1, in which the manipulators (M) synchronously manipulate the component (B) in order to transport it from an initial situation to a target situation.

3. Operating method according to Claim 1 or 2, in which the component (B) has a deformation caused by its intrinsic weight, and the manipulators (M) manipulate the component (B) into a desired shape and/or keep it in a desired shape.

4. Operating method according to Claim 3, in which the desired shape corresponds to a shape in which the deformation caused by the intrinsic weight of the component (B), or the internal stresses of the component (B), are compensated.

5. Operating method according to Claim 3 or 4, in which the manipulators (M) transport the component (B) in the desired shape to the target situation, at least in sections.

6. Operating method according to one of Claims 3 to 5, in which the manipulators (M) manipulate the component (B) into the desired shape by synchronous, or non-synchronous, in particular coordinated manipulation.

7. Operating method according to one of the preceding claims, in which the component (B) in the initial situation has the deformation caused by its intrinsic weight.

8. Operating method according to one of the preceding claims, in which the component (B) is brought into the initial situation by a holding and/or transporting device, preferably a crane construction, in which it is detected by the manipulators (M) and/or manipulated into the desired shape.

9. Operating method according to one of the preceding claims, in which the component (B) is held in the desired shape in the target situation by the manipulators (M) and mounted on an aircraft part.

10. Operating method according to one of the preceding claims, in which the manipulators (M) synchronously manipulate the component (B) independently of the operating situation, preferably a teaching, operating or emergency stop situation.

11. Operating method according to one of the preceding claims, in which the reference movement parameters describe at least one of the following:
- path of movement of the component (B),
- speed of the component (B),
- acceleration of the component (B),
- position of the component (B),
- orientation of the component (B).

12. Operating method according to one of the preceding claims, in which the respective base coordinate systems of the manipulators (M) are fixed relative to the respective manipulators (M) in order also to move with the respective manipulators (M), and the coordinate system assigned to the component (B) is fixed relative to the component (B), in order also to move with the component (B).

13. Operating method according to one of the preceding claims, in which the respective base coordinate systems of the manipulators (M) are referenced to the coordinate system assigned to the component (B) and follow same, while the transformation between the manipulators (M) and the points of application of the manipulators (M) on the component (B) is fixed, and/or the transformation between the points of application of the manipulators (M) on the component (B) and the master kinematics of the component (B), which are defined by the reference movement parameters, are fixed.

14. Operating method according to one of the preceding claims, in which the manipulators (M) are assigned one and the same control/computing unit (RPC), and the manipulators (M), in particular their synchronous manipulation or at least the start of the synchronized manipulation are controlled by means of the manipulators (M) by one and the same control/computing unit (RPC), preferably simultaneously.

15. Operating method according to one of the preceding claims, in which the reference movement parameters of the component (B) and the respective transformed reference movement parameters are included in one and the same control/computing unit (RPC).

16. Operating method according to one of the preceding claims, in which the manipulators (M) are synchronously linked via a master/slave interface.

17. Operating method according to one of the preceding claims, in which the manipulators (M) are of the same or different design, selected from the group comprising linear, serial, Cartesian or hybrid manipulators.

18. Operating method according to one of the preceding claims, in which the component (B) is a shell segment for an aircraft outer skin, and the target situation of the shell segment corresponds to an assembling situation in which the shell segment is mounted.

19. Control for a positioning system (1), in particular for aircraft structural assembly, in which the positioning system (1) comprises a plurality of positioners (2a, 2b, 2c) which respectively have at least one manipulator (M) in which the control executes the operating method according to one of the preceding claims during operation.

20. Positioning system (1), in particular for aircraft structural assembly, the positioning system (1) comprising a plurality of positioners which respectively have at least one manipulator (M),
- in which the manipulators (M) are configured such that they execute the operating method according to one of Claims 1 to 18 during operation, or
- in which the positioning system (1) comprises a control according to Claim 19.

## Revendications

1. Procédé de fonctionnement pour un système de positionnement (1), notamment pour un montage de structure d'avion, le système de positionnement (1) comprenant plusieurs éléments de positionnement (2a, 2b, 2c) comportant respectivement au moins un manipulateur (M), sachant que :
- un composant (B) est détecté à l'aide des manipulateurs (M) ; et
- le composant (B) est manipulé de façon synchrone à l'aide des manipulateurs (M) en même temps qu'il est détecté ensemble par les manipulateurs (M) ;
**caractérisé en ce que** :
- un système de coordonnées de base respectif est associé à chaque manipulateur (M) ;
- la position et l'orientation du composant (B) sont ou seront déterminées dans la situation de départ ;
- la position et l'orientation du composant (B) sont ou seront déterminées dans la situation cible ;
- des paramètres de mouvement de référence sont ou seront déterminés, lesdits paramètres se référant à un système de coordonnées associé au composant (B) et décrivant le mouvement du composant (B) en partant de la position et de l'orientation dans la situation de départ pour arriver à la position et l'orientation dans la situation cible ;
- les paramètres de mouvement de référence sont ou seront transformés dans le système de coordonnées de base respectif ; et
- les manipulateurs (M) manipulent le composant (B) sur la base des paramètres de mouvement de référence transformés respectifs.

2. Procédé de fonctionnement selon la revendication 1, les manipulateurs (M) manipulant le composant (B) de façon synchrone pour le transporter d'une situation de départ à une situation cible.

3. Procédé de fonctionnement selon la revendication 1 ou 2, le composant (B) présentant une déformation occasionnée par le poids propre et les manipulateurs (M) manipulant le composant (B) dans une forme souhaitée et/ou le maintenant dans une forme souhaitée.

4. Procédé de fonctionnement selon la revendication 3, la forme souhaitée correspondant à une forme dans laquelle la déformation occasionnée par le poids propre du composant (B) ou les tensions intérieures du composant (B) sont compensées.

5. Procédé de fonctionnement selon la revendication 3 ou 4, les manipulateurs (M) transportant au moins en partie le composant (B) dans la forme souhaitée jusqu'à attendre la situation cible.

6. Procédé de fonctionnement selon l'une quelconque des revendications 3 à 5, les manipulateurs (M) manipulant le composant (B) par manipulation synchrone ou non synchrone, notamment manipulation coordonnée, pour lui donner la forme souhaitée.

7. Procédé de fonctionnement selon l'une quelconque des revendications précédentes, le composant (B) comportant dans la situation de départ la déformation occasionnée par son poids propre.

8. Procédé de fonctionnement selon l'une quelconque des revendications précédentes, le composant (B) étant amené par un dispositif d'arrêt et/ou de transport, de préférence une construction de grue, dans la situation de départ dans laquelle il est détecté par les manipulateurs (M) et/ou manipulé dans la forme souhaitée.

9. Procédé de fonctionnement selon l'une quelconque des revendications précédentes, le composant (B) étant maintenu dans la forme souhaitée dans la situation cible par les manipulateurs (M) et étant monté à une partie d'avion.

10. Procédé de fonctionnement selon l'une quelconque des revendications précédentes, les manipulateurs (M) manipulant le composant (B) de façon synchrone indépendamment de la situation de fonctionnement, de préférence une situation d'enseignement, de fonctionnement, ou de fonctionnement en continu.

11. Procédé de fonctionnement selon l'une quelconque des revendications précédentes, les paramètres de mouvement de référence décrivant au moins un des éléments suivants :
- trajectoire de déplacement du composant (B) ;
- vitesse du composant (B) ;
- accélération du composant (B) ;
- position du composant (B) ;
- orientation du composant (B).

12. Procédé de fonctionnement selon l'une quelconque des revendications précédentes, les systèmes de coordonnées de base respectifs des manipulateurs (M) étant fixes par rapport aux manipulateurs (M) , respectifs pour se déplacer conjointement avec les manipulateurs (M) respectifs et le système de coordonnées associé au composant (B) étant fixe par rapport au composant (B) pour se déplacer conjointement avec le composant (B).

13. Procédé de fonctionnement selon l'une quelconque des revendications précédentes, les systèmes de coordonnées de base respectifs des manipulateurs (M) étant référencés sur le système de coordonnées associé au composant (B) et le suivant tandis que la transformation entre les manipulateurs (M) et les points de préhension des manipulateurs (M) sur le composant (B) sont fixes et/ou la transformation entre les points de préhension des manipulateurs (M) sur le composant (B) et la cinématique maître du composant (B) définie par les paramètres de mouvement de référence est fixe.

14. Procédé de fonctionnement selon l'une quelconque des revendications précédentes, une seule et même unité de commande/calcul (RPC) étant associée aux manipulateurs (M) et les manipulateurs (M), notamment leur manipulation synchrone ou au moins le démarrage de leur manipulation synchronisée, étant commandés à l'aide des manipulateurs (M), par le biais d'une seule et même unité de commande/calcul (RPC), de préférence simultanément.

15. Procédé de fonctionnement selon l'une quelconque des revendications précédentes, les paramètres de mouvement de référence du composant (B) et les paramètres de mouvement de référence transformés respectifs étant contenus dans une seule et même unité de commande/calcul (RPC).

16. Procédé de fonctionnement selon l'une quelconque des revendications précédentes, les manipulateurs (M) étant reliés de façon synchrone via une interface maître/esclave.

17. Procédé de fonctionnement selon l'une quelconque des revendications précédentes, les manipulateurs (M), de même type ou de type différent, étant sélectionnés dans le groupe comprenant les manipulateurs linéaires, sériels, cartésiens et hybrides.

18. Procédé de fonctionnement selon l'une quelconque des revendications précédentes, le composant (B) étant un segment de coque pour un carénage extérieur d'avion et la situation cible du segment de coque correspondant à une situation de montage dans laquelle le segment de coque est monté.

19. Élément de commande pour un système de positionnement (1), notamment pour un montage de structure d'avion, le système de positionnement (1) comprenant plusieurs éléments de positionnement (2a, 2b, 2c) comportant respectivement au moins un manipulateur (M), l'élément de commande mettant en oeuvre, en fonctionnement, le procédé de fonctionnement selon l'une quelconque des revendications précédentes,

20. Système de positionnement (1), notamment pour le montage de structure d'avion, le système de positionnement (1) comprenant plusieurs éléments de positionnement comportant respectivement au moins un manipulateur (M) ;
- les manipulateurs (M) étant configurés de telle sorte qu'ils mettent en oeuvre, en fonctionnement, le procédé de fonctionnement selon l'une quelconque des revendications 1 à 18 ; ou
- le système de positionnement (1) comprenant un élément de commande selon la revendication 19.
